# EUROPEAN PATENT APPLICATION

(11) **EP 4 184 152 A1**
(43) Date of publication of application: **24.05.2023**
(21) Application number: 22460042.9
(22) Date of filing: 15.09.2022
(51) Int. Cl.: G01N 23/06, G01N 23/223

(54) **SYSTEM FOR DETERMINING THE SELF-ABSORPTION CORRECTION IN Y AND X-RAY SPECTOMETRY**

(30) Priority: 16.09.2021 PL 43907721
(71) Applicant: Politechnika Slaska, 44-100 Gliwice (PL)
(72) Inventor: Tudyka, 44-100 Glwice (PL); Kolarczyk, Aleksander, 41-700 Ruda Slaska (PL); Rocznik, Joanna, 44-100 Gliwice (PL); Poreba, Grzegorz, 40-040 Katowice (PL)

(57) **Abstract**

A system for determining the self-absorption correction in γ and X-ray spectrometry, characterized by the fact that it consists of a disk (1) with at least three bars (2) mounted at different lengths, at the ends of which they are evenly placed over the entire volume of the tested material (5) at least three capsules (3) with radioactive material (6) providing a source of γ or X low energy quantum emitters with an energy of not more than 300 keV. 2.

## Description

The subject of the invention is a system for determining self-absorption correction in γ and X-ray spectrometry.

In γ and X ray spectrometry radiation is self-absorbed in the tested materials. If density or chemical composition significantly deviates from the reference standards used for calibration, the self-absorption effect of γ and X radiation should be taken into account.

The solutions used so far consist of x-raying the tested material with a beam of γ or X radiation, and then calculating the theoretical correction for self-absorption (M. Bonczyk, "Determination of 210Pb concentration in NORM waste - An application of the transmission method for self-attenuation corrections for gamma-ray spectrometry ", Radiation Physics and Chemistry 148, (2018), 1-4). This solution is limited to specific γ and X-ray lines and by assumptions used to derive correction formulas. In some cases the self-absorption correction may be strongly susceptible to non-homogeneity of the tested material. Another way is to estimate the correction with the knowledge of the chemical composition and mass of the tested material, but such data is very often not available. In other works (C. A. McMahon, M. F. Fegan, J. Wong, S. C. Long, T. P. Ryan, P. A. Colgan, "Determination of self-absorption corrections for gamma analysis of environmental samples: comparing gamma absorption curves and spiked matrix-matched samples, Applied Radiation and Isotopes 60 (2004) 571-577), an isotope tracer of known radioactivity is added to directly determine the correction for self-absorption. Adding a radionuclide spike is a process that destroys the tested sample, and the radionuclide spike itself is irreversibly lost; moreover, waste is generated that may be highly radioactive.

A technical issue that requires a solution is the development of a new, innovative system for determining the self-absorption correction in γ and X-ray spectrometry, which will allow to determine the correction for several radionuclides at the same time, while ensuring that the corrections are less susceptible to the homogeneity of the material, the test is not destructive and it does not require detailed knowledge of the construction of the γ and X-ray detector.

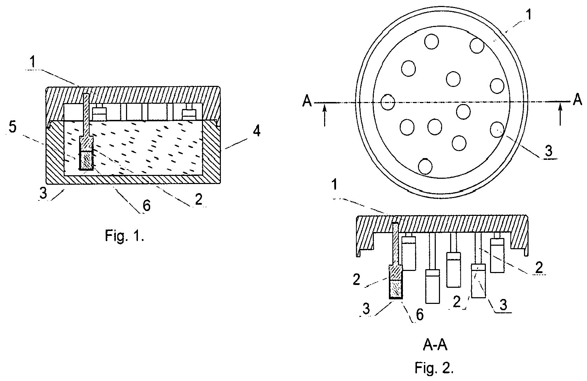

The subject of the invention is presented in the drawing, in which Fig. 1 shows a cross-section of the system for determining the self-absorption correction in γ and X-ray spectrometry placed in a measuring container with the tested material, Fig. 2 shows a bottom view and a cross-section of the system for determining the correction on self-absorption in γ and X-ray spectrometry.

The device for determining the correction for self-absorption consists of a disk (1) in which twelve rods (2) of different length are mounted, at the ends of which twelve capsules (3) are placed. Capsules (3) are evenly distributed in the volume of the measuring container (4). The device for determining the correction for self-absorption is put on the measuring container (4) in which 100 g of the tested radioactive material (5) with an activity of not more than 50 Bq·kg⁻¹ are placed. The capsules 1 mL (3) fit tightly into the rods (2), are made of polytetrafluoroethylene. The capsule wall thickness is 0.5 mm. In the capsules (3) there is radioactive material (6) in the form of a radioactive series ²³⁸U in the radioactive equilibrium state, with an activity of ²³⁸U equal to 1.25 Bq in each capsule (3).

In the tested material (5), for which the self-absorption correction is determined, at least three capsules (3) with a source of low-energy γ or X quantum emitters (6) with energy not exceeding 300 keV are placed. Capsules (3) with radioactive material (6) emitting low-energy γ or X radiation are placed in the measuring container (4). The distribution of capsules (3) is uniform with respect to the height and proportional to the square of the distance from the axis of symmetry of the γ and X radiation detector so that the radiation flux of the radioactive material (6) from the capsules (3) and the same radioactivity evenly distributed in the volume of the measuring container (4) is similar. The capsules (3) with the radioactive material (6) have a wall thickness of not more than 3 mm and are made of plastic. The total volume of capsules (3) with radioactive material (6) is not more than 20% of the volume of the measuring vessel (4). The total radioactivity of the radioactive material (6) in the capsules (2) is at least five times greater than the radioactivity of the test material (5) in the measuring container (4) for a given radionuclide.

The system for determining the self-absorption correction in γ and X radiation spectrometry is used in the measurement of ²¹⁰Pb, ²³²Th, ²²⁶Ra, ²⁴¹Am and other radionuclides with energies less than 300 keV, as well as in γ and X radiation spectrometry coupled with neutron activation.

The system according to the invention allows the tested material to be x-rayed with several γ and X lines, and the x-ray takes place from the inside of the tested material.

The advantage of the solution according to the invention is the direct measurement of the correction for the self-absorption effect of γ and X-rays simultaneously for several energies. Due to the placement of the radioactive substance in the capsules and their even distribution in the sample volume, the method of measuring the self-absorption effect by means of the invention is directly based and very similar to the method using radioisotope markers, but does not require time-consuming sample preparation and does not irreversibly destroy the material. Moreover, a significant advantage of the invention is the fact that it saves the radioactive spike material which, once placed in capsules, does not need to be refilled as it does not come into direct contact with the substance to be measured and is not contaminated.

## Claims

1. A system for determining the self-absorption correction in γ and X-ray spectrometry, **characterized by** the fact that it consists of a disk (1) with at least three bars (2) mounted at different lengths, at the ends of which they are evenly placed over the entire volume of the tested material (5) at least three capsules (3) with radioactive material (6) providing a source of γ or X low energy quantum emitters with an energy of not more than 300 keV.

2. The system according to claim 1 wherein the capsules (3) are placed in the measurement container (4) at different heights and at different distances from the symmetry system of the γ or X radiation detector.

3. The method according to claim 1 wherein the capsules (3) have a wall thickness of not more than 3 mm and are made of plastic.

4. The system according to claim 1 wherein the total volume of the capsules (3) with the radioactive material (6) is not greater than 20% of the volume of the measuring container (4).

5. The system according to claim 1 wherein the total radioactivity of the radioactive material (6) in the capsules (3) is at least five times greater than the radioactivity of the test material (5) for a given radionuclide.
